# EUROPEAN PATENT APPLICATION

(11) **EP 2 634 988 A1**
(43) Date of publication of application: **04.09.2013**
(21) Application number: 12157750.6
(22) Date of filing: 01.03.2012
(51) Int. Cl.: H04L 29/06, H02J 13/00, G06F 9/48

(54) **A method and a system for performing a security update in a smart grid network**

(71) Applicant: Siemens Aktiengesellschaft, 80333 München (DE)
(72) Inventor: Boulila, Naoufel Dr., 80809 München (DE)

(57) **Abstract**

A method and system for performing security updates of smart grid components within a smart grid network, wherein autonomous agents monitor continuously smart grid components of said smart grid network with respect to a current security update state and/or a security update level of the respective smart grid components and perform security update actions on these smart grid components depending on the monitored security update state and/or security update levels.

## Description

The invention relates to a method and a system for performing security updates of smart grid components within a smart grid network.

Smart grid networks are formed by an aggregation of different heterogeneous multi-dimensional networks comprising different kinds of smart grid components such as smart meters. A smart grid network allows a sustainable power generation by the integration of distributed generators in consumer management through micro grids and demand response. In the field of rail electrification, for example, modern converters connect public grids and railway networks transparently wherein railway systems can be used as energy storage facilities. Moreover, in smart grid networks end-customers can become prosumers. The end-customers can play an active role as both power consumer and power producer and can control the power consumption in an optimized environmentally responsible manner.

The number of intelligent smart grid components in a smart grid network is growing continuously and will reach millions of smart grid components in the near future. Within a smart grid network it is necessary to secure various smart grid components, in particular at end-point peripherals, such as smart meters. Smart meters are vulnerable smart grid components which have to be updated continuously by vendors and smart grid network operators to keep up against hacking threats. Therefore, it is necessary to perform security updates of smart grid components within the smart grid network regularly. However, because of the complexity of the smart grid network and the high number of smart grid components performing security updates of smart grid components becomes increasingly difficult to manage. Accordingly, managing the security of the smart grid network which is a crucial topic in such a smart grid network becomes very difficult regarding the complexity and heterogeneous nature of the power grids . The huge number of smart grid network components makes it very hard to deal with security issues such as the continuous update of the software components and the corresponding security levels of the smart grid components within the smart grid network.

Accordingly, it is an object of the present invention to provide a method and a system which allows to perform security updates of smart grid components within a smart grid network efficiently.

This object is achieved by a method for performing security updates of smart grid components within a smart grid network comprising the features of claim 1.

Accordingly, the invention provides a method for performing security updates of smart grid components within a smart grid network,
wherein autonomous agents monitor continuously smart grid components of said smart grid network with respect to a current security update state and/or a security update level of the respective smart grid components and perform security update actions on the smart grid component depending on the monitored security update state and/or security update levels.

The method according to the present invention provides a mechanism that can be automated and offers better ways for scalability as smart grid networks keep growing.

In a possible embodiment of the method according to the present invention the mobile agents comprise a security update agent which is provided by security updates for different types of smart grid components from a network user or a data base.

In a possible embodiment of the method according to the present invention the security updated agent notifies an event listener agent about the security updates in event messages indicating an event type.

In a further possible embodiment of the method according to the present invention a smart grid network monitoring agent monitors the smart grid network to identify malicious activities in the smart grid network and/or suspect behaviour of a smart grid component and notifies the event listener agent about corresponding events in event messages indicating an event type .

In a further possible embodiment of the method according to the present invention the event listener agent determines based on the event types indicated by the event messages received from the security update agent and/or said smart grid network monitoring agent a security update action to be performed in said smart grid network by a corresponding agent.

In a further possible embodiment of the method according to the present invention an event listener agent supplies a dispatcher agent with an event type, the determined security update action and a possible location of the defect in a sub-network of said smart grid network.

In a further possible embodiment of the method according to the present invention the dispatcher agent checks whether a task agent has already registered with a smart grid component of the sub-network, where the determined security update action is to be performed to cure the defect in the sub-network of said smart grid network and establishes a secure connection to the task agent, if such a task agent has registered with a smart grid component of the respective sub-network.

In a further possible embodiment of the method according to the present invention, wherein if no task agent has registered with a smart grid component of the sub-network where the determined security update action is to be performed the dispatcher agent creates a task agent and provides the created task agent with an action type of the determined security update action to be performed in the respective sub-network, with a location in the sub-network where a defect is to be cured by the respective security update action and with an authorization to perform the respective security update action.

In a further possible embodiment of the method according to the present invention the created task agent migrates within the smart grid network to the location where the security action is to be performed.

In a further possible embodiment of the method according to the present invention the migrated task agent establishes a connection to a node in a sub-network and checks whether the node is a leaf node in the network topology of the smart grid network.

In a further possible embodiment of the method according to the present invention if the node is a leaf node in the network topology of the smart grid network, the task agent applies the security update action, reports this back to the dispatcher agent and exits.

In a further possible embodiment of the method according to the present invention wherein if the node is not a leaf node in the topology of the smart grid network, the task agent migrates further to a sub-network and applies recursively the security update action on lower level nodes in the network topology of the smart grid network.

In a further possible embodiment of the method according to the present invention the agents are mobile agents each comprising a globally unique agent identifier.

In a further possible embodiment of the method according to the present invention the agents do authenticate each other based on unique certificates before communicating with each other.

In a further possible embodiment of the method according to the present invention the task agent and a smart grid component to which a security update action is to be performed by the task agent do authenticate each other before the task agent performs the security update action on the respective smart grid component.

The invention further provides an autonomous multi-agent system for performing security updates in smart grid components in a smart grid network comprising the features of claim 16.

Accordingly, the invention provides an autonomous multi-agent system for performing security updates of smart grid components in a smart grid network,
wherein said system comprises autonomous agents which are adapted to monitor continuously smart grid components of said smart grid network with respect to a current security update state and a security update level of the respective smart grid components and which are adapted to perform security update actions on these smart grid components depending on the monitored security update states and/or security update levels.

In the following possible embodiments of the method and system for performing security updates in a smart grid network are described with reference to the enclosed figures with more detail.
- Fig. 1: shows a diagram for illustrating the distributed multi-agent system for performing security updates in a smart grid network according to a possible implementation of the present invention;
- Fig. 2: shows a diagram for illustrating an authentication and authorization mechanism between mobile agents and smart grid network components as employed in a possible implementation of the method and system according to the present invention;
- Fig. 3: shows a diagram for illustrating a propagation of mobile agents in a smart grid network employed in a possible implementation of the method and system according to the present invention.

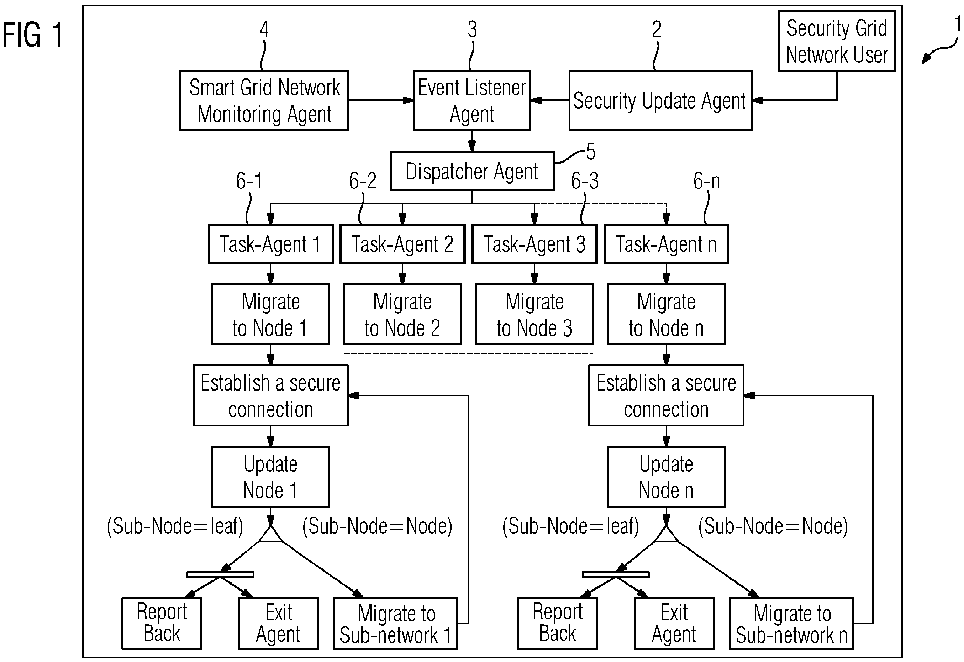

As can be seen in Fig. 1 the multi-agent system 1 according to the present invention comprises multiple autonomous agents for providing the security updates of smart grid components within a smart grid network. These autonomous agents are adapted to monitor continuously smart grid components such as smart meters of the smart grid network with respect to a current security update state and/or a current security update level of the respective smart grid component. These autonomous agents do interact with each other and are adapted to perform security update actions on the smart grid component depending on the monitored security update state and/or security update levels.

As is shown in the implementation of Fig. 1 there are different autonomous agents which interact with each other. Mobile agents are autonomous program entities that can travel through a network of heterogeneous machines and which can act on behalf of a user. Mobile agents are a class of agents whose predominant feature is the ability to move between nodes on a network or between nodes across networks. The communication between agents can take place based on peer-to-peer protocols. The communication between an agent and the parent agent which has created the agent can take place based on a client server protocol. Each agent, whether mobile or stationary, can be identified in a possible implementation by a globally unique agent identifier. Each mobile agent has its own plan and hence can initiate and control its interactions according to its individual needs and goals. The required degree of flexibility for those interactions between agents can be provided by a message passing scheme.

As is shown in the implementation of Fig. 1 the multi-agent system 1 consists of a set of agents cooperating together to achieve the goal of providing maximum security for a smart grid network and its smart grid components. The mobile agents are entities that perform actions on behalf of a user or of a computer system.

In the shown implementation of Fig. 1 the multi-agent system 1 comprises a security update agent 2 which is provided by security updates for different types of smart grid components from a network or from a data base. The security update agent 2 is the agent which is directly provided by the latest security updates from a security grid network user. The user main task is to collect all updates for different types of smart grid components on the smart grid network and supply the security update agent 2 with them. The security update agent 2 then notifies an event listener agent 3 about the security updates in event messages indicating an event type. The multi-agent system 1 further comprises a smart grid network monitoring agent 4 that monitors the smart grid network to identify malicious activities in the smart grid network and/or suspect behaviour of a smart grid component and which then notifies the event listener agent 3 about corresponding events in event messages indicating an event type. The smart grid network monitoring agent 4 can use heuristics to detect an intrusion from external networks and/or suspect behaviour caused by viruses or worms. If the smart grid network monitoring agent 4 detects such an event it sends such a corresponding event in an event indicating message to the event listener agent 3.

The event listener agent 3 determines based on the event types indicated in the event messages received from the security update agent 2 and/or the smart grid network monitoring agent 4 a security update action to be performed in the smart grid network by a corresponding agent. The event listener agent 3 is in a continuous state of listening to any security updates on the grid. Based on the type of event delivered by the security update agent 2 and/or the smart grid network monitoring agent 4 the event listener agent 3 determines a security update action to be taken by a corresponding agent. If, for example, an event indicates that there is a security breach in a sub-network of the smart grid network and the security action to be performed might comprise first to lock the affected node in the sub-network, then to update the node and finally to unlock the node or smart grid component.

The event listener agent 3 then notifies a dispatcher agent 5 with an event type of the event. Further, the event listener agent 3 supplies the dispatcher agent 5 with the determined security update action and a possible location or address of a defect in a sub-network of the smart grid network. The dispatcher agent 5 checks whether a task agent 6-i has already registered with a smart grid component of the affected sub-network, where the determined security update action is to be performed to cure the defect in the sub-network of the smart grid network. Further, the dispatcher agent 5 establishes a secure connection to the identified task agent 6-i if such a task agent 6-i has already registered with a smart grid component of the respective sub-network of the smart grid network. In contrast, if no task agent has registered with a smart grid component of the affected sub-network, where the determined security update action is to be performed, the dispatcher agent 5 creates a new task agent 6-i. Further, the dispatcher agent 5 provides the created task agents 6-i with an action type of the determined security update action to be performed in the respective sub-network. The dispatcher agent 5 further provides the created task agent 6-i with a location or address of a node, or of a component of a sub-network, where a defect is to be cured by the respective security update action. In a further possible implementation the dispatcher agent 5 further provides the created task agent 6-i with an authorization to perform the respective security update action in the sub-network of the smart grid network. The dispatcher agent 5 receives the type of event, the corresponding security update action and a possible location of the defect in the smart grid network. The dispatcher agent 5 then selects the appropriate task agent 6-i which already has registered with the given node or sub-network. Only if such a task agent does not yet exist, it then creates the new task agent and provides him with the type of security action it needs to execute including the latest security updates to apply on the given node and an authorization for the update security action. The created task agent 6-i can provide a report back upon which the dispatcher agent 5 decides for the next action to be taken.

If no task agent has been registered with the affected sub-network, it is necessary to create a new task agent 6-i which then migrates within the smart grid network to the location where the security action is to be performed. The task agent 6-i can migrate from a top level network to the node where the security update action is to be performed. The task agent 6-i can after migration establish a secure connection to the node of the sub-network. The task agent 6-i can then check, whether the node of the sub-network is a leaf node in a network topology of the smart grid network. If the node is a leaf node, the task agent 6-i applies the security update action to the affected node of the sub-network. Further, the task agent 6-i can report the performance of the security action to the affected node back to the dispatcher agent 5. After this, the task agent 6-i can exit after having applied the security updates and after having reported back to the dispatcher agent 5. In contrast, if the node checked by the task agent 6-i is not a leaf node, the task agent 6-i migrates further to a sub-network and applies recursively the security update action on lower level nodes in the network topology of the smart grid network.

Fig. 1 shows an example where the dispatcher agent 5 creates different task agents 6-1, 6-2, 6-3, 6-n. These created task agents 6-i can migrate to a corresponding node having a security defect. After having reached the node in the smart grid network, the task agent 6-i can establish a secure connection with the affected node. Then, the task agent 6-i can perform the security update action, such as a firmware update or a communication protocol update and decide, whether the updated node is a leaf node in the network topology of the smart grid network or not. If the updated node is a leaf node, the task agent 6-i notifies the dispatcher agent 5 about the fulfilment of its mission and exits the process. If the updated node is not a leaf node, the task agent 6-i can migrate to lower level nodes within the hierarchy of the smart grid network and again establish a secure connection to the next lower level nodes.

To ensure that the agents do not harm their environment or any other agent, the system can implement security mechanisms. In a possible implementation any communication that takes place between agents is first preceded by an authentication mechanism for instance based on unique digital certificates. That is, the identity of the agent is confirmed and its point or origin is established. Finally, the agents do authenticate each other based on unique certificates for communicating with each other.

Further, task agents 6-i and a smart grid component for which a security update action is performed by the task agent 6-i do authenticate each other before the task agent 6-i performs the security update action on the respective smart grid component. Accordingly, there is an authentication of the mobile agent and the smart grid component that needs a security update. Both the mobile agent and the smart grid component provide their identity to avoid spoofing. In a possible implementation the authentication is performed once per access for a security update action performed on a smart grid component.

Further, a mobile agent after being authenticated, has to provide a permission that it has the right to update the intended smart grid component or node to ensure that the mobile agents and the security update action is allowed within the current context of the smart grid network. This means that a permission set used to protect objects for smart grid components has to be rich and flexible enough to ensure that its integrity is maintained from unauthorized accesses. Moreover, different nodes or smart grid components may have different permission sets based on their type. In a possible implementation the authorization of a mobile agent such as a task agent 6-i is provided by the dispatcher agent 5.

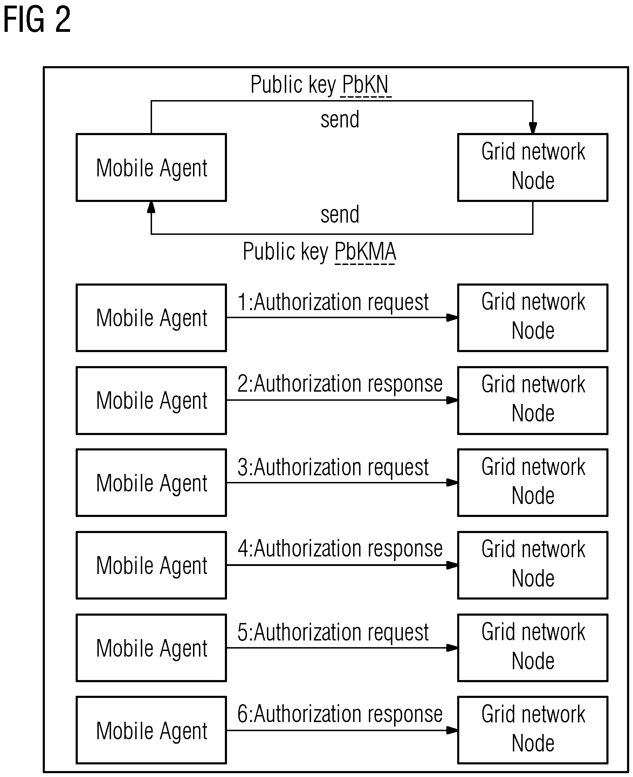

While an agent is in transit, the agent is vulnerable either to being modified in order to change its original purpose or to being duplicated to obtain its authentication signature. Accordingly, in a possible implementation when the agent is transmitted, it is protected by encryption mechanisms which can be used to protect the agent at a data level. This is also illustrated in Fig. 2. In a possible implementation the authentication mechanism can use a public key encryption method. For example, a device or a smart grid component of the smart grid network can provide its serial number to a mobile agent using a public key encryption method. The mobile agent can then check the validity of the smart grid component using its hardware serial number from a remote server of the company who provided the device or smart grid component.

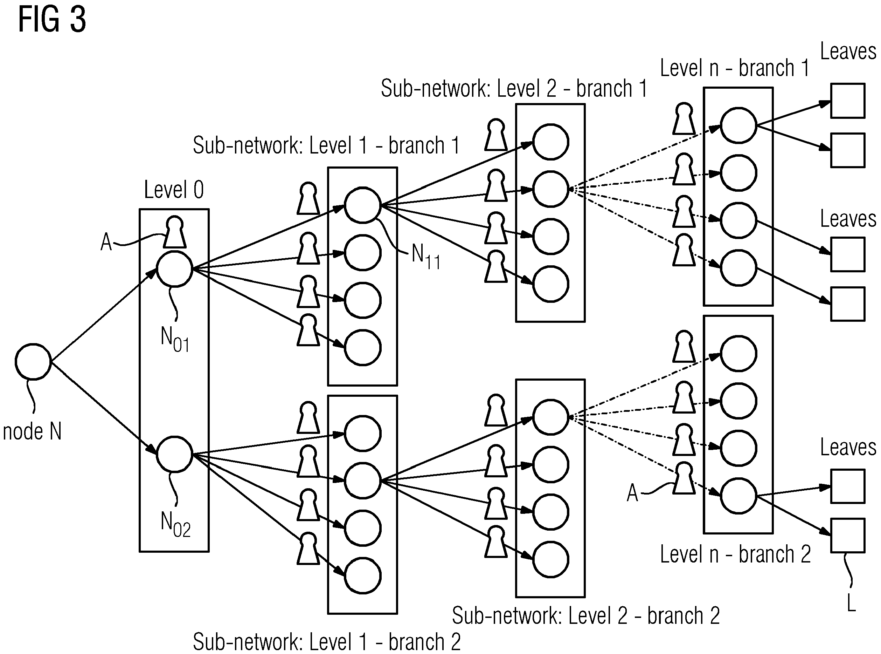

Fig. 3 illustrates a mechanism which can be used in the method or system 1 according to the present invention to propagate mobile agents through a smart grid network in order to apply an action to a smart grid component such as applying security updates on a given node of the smart grid network. In Fig. 3 N stands for a node in the smart grid network, for example a router, a switch, a hub, a computer or any other smart grid network component. Further, L stands for a leaf node in the smart grid network which has no further child nodes such as a smart meter and/or end peripheral devices of the smart grid network. Further, A indicates an agent which can migrate from one sub-network of the smart grid network to another sub-network.

The mobile agents A can interact with other agents that also room the smart grid network. In a possible implementation the mobile agents A can migrate from one host device to another host device or smart grid component. For the migration the mobile agents A have the capability to save their execution state. Accordingly, the mobile agents A have process persistence property. Further, there is provided a communication mechanism to transfer the mobile agent A across the smart grid network. Mobile agents A can in a possible implementation use a variety of different transport mechanisms giving the migration of the mobile agents greater flexibility.

Reference signs ...
1 Multi-agent system
2 Security update agent
3 Event listener agent
4 Smart grid network monitoring agent
5 Dispatcher agent
6 Task agent

## Claims

1. A method for performing security updates of smart grid components within a smart grid network,
wherein autonomous agents monitor continuously smart grid components of said smart grid network with respect to a current security update state and/or a security update level of the respective smart grid components and perform security update actions on these smart grid components depending on the monitored security update state and/or security update levels.

2. The method according to claim 1,
wherein the mobile agents comprise a security update agent (2) which is provided with security updates for different types of smart grid components from a network user or a data base.

3. The method according to claim 2,
wherein the security update agent (2) notifies an event listener agent (3) about the security updates in event messages indicating an event type.

4. The method according to claim 3,
wherein a smart grid network monitoring agent (4) monitors the smart grid network to identify malicious activities in the smart grid network and/or suspect behaviour of a smart grid component and notifies said event listener agent (3) about corresponding events in event messages indicating an event type.

5. The method according to claim 4,
wherein the event listener agent (3) determines based on the event types indicated by the event messages received from said security update agent and/or said smart grid network monitoring agent (4) a security update action to be performed in said smart grid network by a corresponding agent.

6. The method according to claim 5,
wherein the event listener agent (3) supplies a dispatcher agent (5) with an event type, the determined security update action and a possible location of the defect in a sub-network of said smart grid network.

7. The method according to claim 6,
wherein the dispatcher agent (5) checks whether a task agent (6) has already registered with a smart grid component of the sub-network, wherein the determined security update action is to be performed to cure the defect in the sub-network of said smart grid network and establishes a secure connection to the task agent (6), if such a task agent (6) has registered with a smart grid component of the respective sub-network.

8. The method according to claim 7,
wherein if no task agent (6) has registered with a smart grid component of the sub-network where the determined security update action is to be performed the dispatcher agent (5) creates a task agent (6) and provides the created task agent of the determined security update action to be performed in the respective sub-network, with a location in the sub-network where a defect is to be cured by the respective security update action and with an authorization to perform the respective security update action.

9. The method according to claim 8,
wherein the created task agent (6) migrates within the smart grid network to the location where the security action is to be performed.

10. The method according to claim 9,
wherein the migrated task agent (6) establishes a connection to a node (N) in a sub-network and checks whether the node (N) is a leaf node (L) in the network topology of the smart grid network.

11. The method according to claim 10,
wherein if the node is a leaf node (L), the task agent (6) applies the security update action and reports this back to the dispatcher agent (5) and exits.

12. The method according to claim 10 or 11,
wherein if the node (N) is not a leaf node, the task agent (6) migrates further to a sub-network and applies recursively the security update action on lower level nodes in the network topology of the smart grid network.

13. The method according to one of the preceding claims 1 to 12,
wherein the agents are mobile agents each comprising a globally unique agent identifier.

14. The method according to one of the preceding claims 1 to 13,
wherein the agents authenticate each other based on unique certificates before communicating with each other.

15. The method according to one of the preceding claims,
wherein the task agent (6) and a smart grid component to which a security update action is to be performed authenticate each other before the task agent (6) performs the security update action on the respective smart grid component.

16. An autonomous multiple agent system (1) for performing security updates of smart grid components within a smart grid network,
said system comprising autonomous agents adapted to monitor continuously smart grid components of said smart grid network with respect to a current security update state and security update level of the respective smart grid components and further adapted to perform security update actions on the smart grid components depending on the monitored security update states and/or security update levels.
